# EUROPEAN PATENT APPLICATION

(11) **EP 0 727 588 A1**
(43) Date of publication of application: **21.08.1996**
(21) Application number: 94929661.0
(22) Date of filing: 14.10.1994
(51) Int. Cl.: F16D 13/46

(54) **STARTING DEVICE**

(30) Priority: 01.11.1993 JP 306978/93; 27.11.1993 JP 340299/93; 25.12.1993 JP 354885/93; 25.12.1993 JP 355299/93
(71) Applicant: EQUOS RESEARCH CO. LTD., Chiyoda-ku, Tokyo 101 (JP)
(72) Inventor: MOROTO, Shuzo, Chiyoda-ku Tokyo 101 (JP); SUMIYA, Koji, Chiyoda-ku Tokyo 101 (JP); KAWAMOTO, Mutumi, Chiyoda-ku Tokyo 101 (JP); KAWAI, Masao, Chiyoda-ku Tokyo 101 (JP); ARUGA, Hideki, Chiyoda-ku Tokyo 101 (JP); SHIIMADO, Toshihiro, Chiyoda-ku Tokyo 101 (JP)
(74) Representative: Heunemann, Dieter, Dr.
(86) International application number: JP9401727
(87) International publication number: WO9512768

(57) **Abstract**

A starting device for coupling the output shaft of an engine to the input shaft of a transmission in a smooth fashion so that no load is applied to a synchronizing mechanism with a minimum shock when connecting and/or disconnecting the two shafts, wherein as a biassing force to a pressure plate (146) increases, first a friction plate (151) having a high friction coefficient of a first clutch member (15) is coupled to a torque transfer member (14) without any slip, and then friction plates (131, 132) having a low friction coefficient of a second clutch member (12) are coupled to the torque transfer member while slipping, whereby the coupling of the second clutch member (12) is completed. Thus, there is produced no coupling shock since the coupling as a whole is completed when the second clutch member (12) which is not likely to produce shocks is smoothly coupled. In addition, since the torque transfer member (14) rotates following the rotation of a flywheel (10) by virtue of the magnetic interaction caused by the movement between a permanent magnet (75) and an aluminum plate (76) when the output shaft (11) of the engine is coupled to the input shaft of the transmission (16), when changing speeds, there is no possibility of the torque transfer member (14) being moved under its own inertia, whereby as a whole the torque transfer member (14), the first clutch member (15) and the second clutch member (12) are coupled to each other in a smooth fashion.

## Description

### BACKGROUND OF THE INVENTION

### FIELD OF THE INVENTION

This invention relates to a starting device for a vehicle and, more particularly, to a starting device for selectively engaging an output shaft of an internal combustion engine with a transmission input shaft.

### DESCRIPTION OF THE RELATED ART

In a vehicle employing a conventional manual transmission unit, a starting device is provided between the engine and the gearbox to control transfer of torque generated by the engine.

Such a conventional starting device mainly consists of a dry, single friction disc, which is selectively either spaced from or in contact with an opposing, mating, member to deliver torque of the engine to the transmission unit.

As the friction disc has a high coefficient of friction, it is difficult to smoothly engage the opposing member and may produce a sudden interlocking between then.

Accordingly, a difference between the rotational speed of the engine and that of the transmission unit cannot be accommodated by such a conventional starting device. The mechanism which minimizes the difference complicates the starting device as disclosed in Japanese Patent Laid Open No. Sho-58-184321.

In the interest of a smooth engagement, it is recommended that the friction disc be made of a low friction material. However, since a single low friction disc cannot deliver sufficient torque, plural discs are conventionally provided as disclosed in Japanese Patent Laid Open No.Heil-158226.

However, it is known that plural friction discs associated with the transmission unit greatly increase the inertia of the input shaft extending from the transmission unit, due to their heavy weight, and thereby impose a big load on the synchronizer system of the transmission unit (i.g. corn-synchronizer system), thus delaying synchronization of gears in the transmission unit.

It is an object of the present invention to provide a starting device which can connect smoothly the output shaft of the engine in relation to the input shaft of the transmission unit.

### SUMMARY OF THE INVENTION

Accordingly, the present invention provides a starting device for connecting and disconnecting an out-put shaft of an internal combustion engine and an input shaft of a transmission unit including:
a first clutch assembly coupled to one of the input shaft and the output shaft;
a second clutch assembly coupled to one of the output shaft and the input shaft;
a torque conduction member between and rotatable relative to said first and second clutch assemblies, said torque conduction member having a first connecting surface for engaging said first clutch assembly and a second connecting surface for engaging said second clutch assembly, said first connecting surface providing a substantially higher engaging force than that provided by said second connecting surface; and
load application means for applying and releasing a load to the first and second connecting surfaces.

The connection between the output shaft of the engine and the input shaft of the transmission unit is carried out by the load application means, by applying the load to the first and second connecting surfaces, connecting the first and second clutch assemblies via the torque conduction members. That is, when the first and second clutch assemblies are connected via the torque conduction member, the first connection surface starts to connect, as the first and second connecting surfaces being applied the load by the load application means.

The second connecting surface having lower engaging force completes the connection, after the first connecting surface completes the connection. A shock upon engagement of the first connection surface is prevented due to engagement of the second connecting surface with slippage.

The disconnection between the output shaft of the engine and the input shaft of the transmission unit is carried out by releasing the load to the first and second connecting surfaces by the load application means, and releasing the engagement of the first connecting surface. That is, the first clutch assembly may be separated from the second clutch assembly, and one of them may be separated from the torque conduction member, the limited inertia thereof affects the transmission unit. For example, in the case where the input shaft of the transmission unit is connected to the first clutch assembly, and the output shaft of the engine is connected to the second clutch assembly, the inertia of the first clutch assembly affects the transmission unit, and the inertia of the second clutch assembly and the torque conduction member do not affect the unit.

In the case where a coupling between the torque conduction member and the output shaft is provided, the coupling can conduct the torque as the engagement of the first connection surface, without the engagement of the second surface. Accordingly, input and output shafts can be coupled smoothly.

### BRIEF DESCRIPTION OF THE DRAWINGS

FIG. 1 is a sectional view depicting a starting device according to the embodiment;
FIG. 2 is a perspective view showing the relative positioning of permanent magnets 75 and an aluminum plate 76;
FIG. 3 is a schematic illustration of a power transmission unit in combination with the starting device;
FIG. 4 is a schematic diagram of that portion of a hydraulic control circuit which controls a release cylinder 30;
FIG. 5 is a block diagram depicting an input-output system of a control unit 700 for the starting device;
FIG. 6 is front view of a steering wheel, as seen by a driver;
FIG. 7 is an example of a flow chart for operating several actuators responsive to a control signal for "forward" from the driver;
FIG. 8 is an example of a flow chart for operating several actuators responsive to a control signal for a gear-shift from the driver;
FIG. 9 is a partial cross-sectional view of a first modification of the embodiment; and
FIG. 10 is a partial cross-sectional view of a second modification of the embodiment.

### DETAILED DESCRIPTION OF THE PREFERRED EMBODIMENT(S)

In order to clarify the present invention, embodiments will be explained with reference to the drawings.

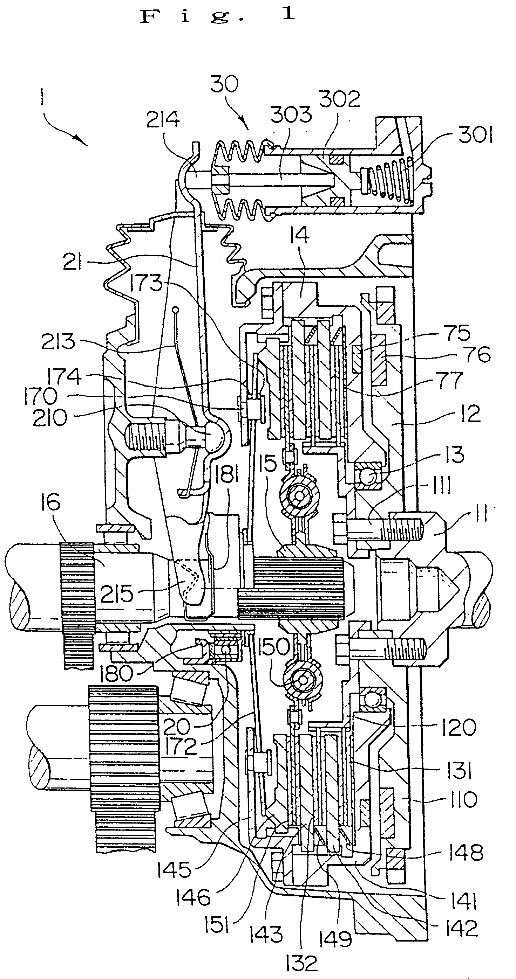

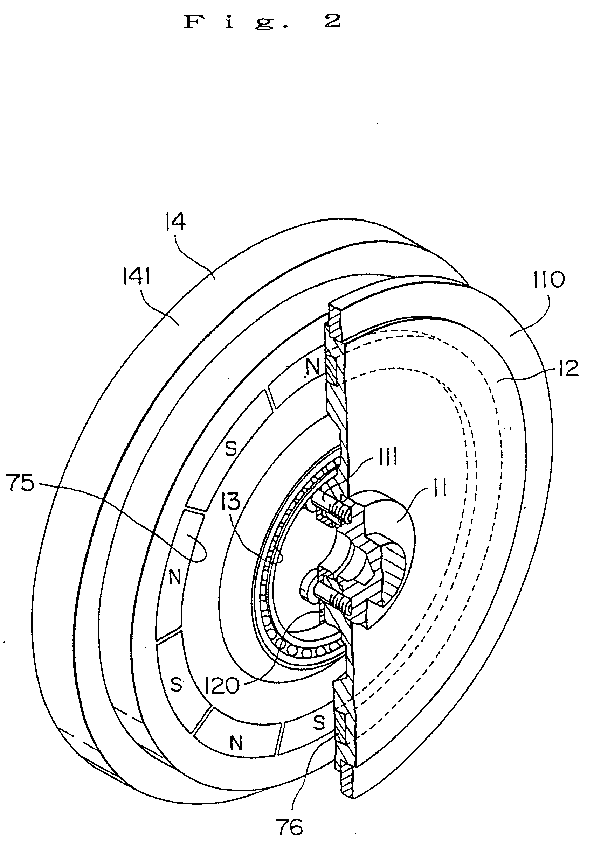

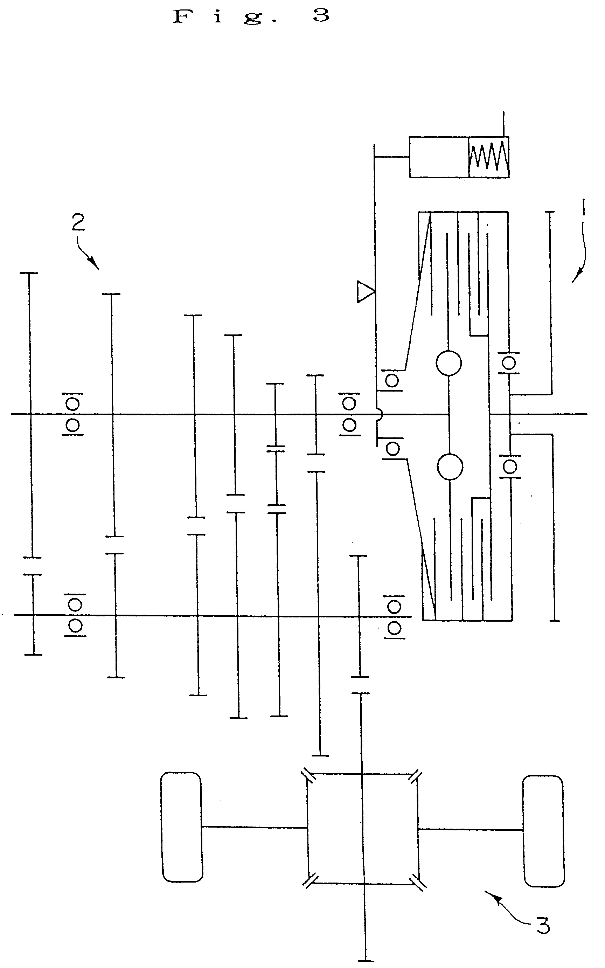

FIG. 1 is a sectional view of an embodiment of a starting device according to the present invention, FIG. 2 is a perspective view showing the position of permanent magnets 75 relative to an aluminum plate 76, arranged in an opposing relationship, and FIG 3. is a schematic view of a power transmission assembly combined with a starting device according to the present invention.

FIG. 3 shows a power transmission unit combined with a starting device 1 in accordance with the present invention. The starting device 1 is adapted to connect and disconnect an input shaft of the transmission unit 2 to/from an output shaft of an engine, responsive to an operation signal. As further shown in FIG. 3, the transmission unit 2 includes plural gear sets, each of which has a different gear ratio. The gear sets are mounted in mechanical alignment, on two parallel shafts, so as to mesh with one another under manual control. A differential gear unit 3 transfers torque from the transmission unit 2 to right and left driving wheels equally or differently.

Incidentally, the transmission unit 2 is, of course, provided with electric motors (not-shown) to move shift forks into predetermined positions to thereby select gears for forward and reverse.

### Overall Structure of Starting Device

The starting device 1 is shown in FIG. 1 as including a second clutch assembly 12 secured to an output shaft 11 of the engine, a torque conduction member 14 rotatable relative to the second clutch assembly 12 via a ball bearing 13, a first clutch assembly 15 slipped over a splined input shaft 16 extending from the transmission unit 2, a release fork 21 for operating the torque conduction member 14 via a release bearing 20, and a release cylinder 30 operating the release fork 21.

### Second Clutch Assembly 12

The second clutch assembly 12 includes a clutch hub 120, two friction plates 131, 132 splined to the clutch hub 120. The second clutch assembly 12 also includes a flywheel 110 secured thereto by means of bolts. The flywheel 110 is a disc of a ferromagnetic substance.

As shown in Fig. 2, flywheel 110 is provided with an annular shaped aluminum plate 76 of a nonmagnetic, electrically conductive metal on its one side surface which faces the torque conduction member 14.

The friction plates 131, 132 are annular discs made of steel with low friction sheet members adhered to both surfaces thereof.

### First Clutch Assembly 15

The first clutch assembly 15 includes a friction plate 151 which is an annular metal plate with a high friction sheet member on both surfaces thereof and a damper 150. The friction coefficient of the "high friction sheet members" on plate 151 should be understood to be higher than that of the "low friction sheet members" utilized in the second clutch assembly 12 because the high friction sheet members are intended to provide a non-yielding interlocked state, rather than a sliding contact.

The damper 150 is provided to smooth fluctuation of the torque generated by the engine and includes three elements. The first being secured to the friction plate 151, the second being slipped over the splined input shaft 16 of the transmission unit 2 and the third being a damper spring arranged between the first aid second elements. It should be noted that the damper can be provided in the second clutch assembly 12 in stead of providing the first clutch assembly.

The torque from the engine is transmitted to the friction plate 151, the damper 150 and the input shaft 16, in succession, while a spring in the damper 150 expands and contracts.

### Adjustment of Engaging Force

The respective friction plates 151, 131, 132 are locked with the torque conduction member in a sequence dictated by their respective friction coefficients, by means of a diaphragm spring 172 which urges these three friction plates integrally in one direction. If necessary, the engaging force on the first clutch assembly 15 or second clutch assembly 12 can be adjusted by using return springs 148 and 149 having different elastic forces but, in the present invention, the return springs are not expected to be sufficiently strong to determine the engaging forces of the clutch assemblies.

### The Torque Conduction Member 14

The torque conduction member 14 is defined by a drum member 141, the inner surface of which is splined for meshing with separate metal separate plates 142, 143, The clutch drum 141 is covered, at its open side, by a clutch cover 145 which has an interior, annular splined surface for receiving a pressure plate 146. As can be understood from the drawing, the return springs 148, 149 are respectively disposed (1) between a closed (right-hand) wall of the clutch drum 141 and the plate 142 and (2) intermediate the two separate plates 142, 143.

As can be seen from FIG. 2, the clutch drum 141 has a closed outer surface wall, facing the aluminum plate 76, which carries the permanent magnets 75, each having N and S poles, radially aligned and alternating with one another at a constant interval. Ferrite is recommended for the permanent magnet 75 but a samarium-cobalt magnet having high-temperature properties is also suitable.

At an inside surface of the closed wall of the clutch drum 141, there is provided a steel plate 77 as a highly magnetically permeable member. The steel plate 77 is a friction plate and forms a magnetic circuit capable of concentrating magnetic flux in cooperation with the aluminum plate 76. The torque conduction member 14 is mounted for rotation relative to the second clutch assembly 12 via the ball bearing 13 in the above mentioned embodiment but can also be mounted on a cover case for the starting device 1 via a bearing.

The clutch cover 145 has the dish-shaped diaphragm spring 172 fastened thereto with rivets 170 via wire rings 173, 174.

The diaphragm spring 172 is supported at its radially innermost edge by the release bearing 20 and is arranged so that its outer, peripheral portion urges the pressure plate 146 responsive to movement of the release bearing 20 in a lateral (right and left on the drawing) direction.

The release fork 21 is provided with a return wire spring 213, so that when one end portion 214 of the release fork 21 is urged to the left in the drawing, the release fork 21 shifts its other end portion 215 in the opposite direction (to the right), about a supporting member 210 which serves as a fulcrum. It should be understood that when the one end portion 214 of the release fork 21 is returned (to the right in the drawing), the other end portion 215 moves to the left. The release cylinder 30 includes a return spring 301, a piston 302 and a rod 303 extending from the piston 302. When the piston 302 is operated by oil pressure to reciprocate the rod 303, to which the one end portion 214 of the release fork 21 is connected, the other end 215 of the release fork 21 is moved as described above.

The release bearing 20 is arranged to slide reciprocally on the case, to the right and left in the drawing, and remains in contact with a positioning member 180 mounted in the case of the starting device 1 even when the one end portion 214 of the release fork 21 is not urged by the rod 303.

The actual position of the positioning member 180 is selected so that the urging force on the pressure plate 146 imparted by the diaphragm spring 172 is sufficient to press together the second clutch assembly 12, the torque conduction member 14 and the first clutch assembly 15 so that torque of the output shaft 11 of the engine will be transferred to the input shaft 16 of the transmission unit 2. Incidentally, the release bearing 20 is provided with an engagement member 181 for engaging the other end portion 215 of the release fork 21, whereby the inner peripheral portion of the diaphragm spring 172 is moved.

When the one end portion 214 of the release fork 21 is urged by the rod 303 to the left in the drawing, the other end portion 215 of the release fork 21 forces the inner peripheral portion of the diaphragm spring 172 to move to the right, via the release bearing 20, in opposition to the elastic force of the diaphragm spring 172.

The above-mentioned motion of the inner peripheral portion of the diaphragm spring 172 first decreases the urging force on the pressure plate 146 and then allows separation of an outer peripheral portion of the diaphragm spring 172 from the pressure plate 146.

The smaller the urging force on the pressure plate 146, the weaker the engaging force on the low friction plates 131, 132 of the second clutch assembly 12 until the engagement of the second clutch assembly 12 is released, followed by release of the friction plate 151 of the first clutch assembly 12, incidentally, the releasing motion of the friction plate 151 does not bring with it slip, as in the case of the low friction plates 131, 132, because of the high friction coefficient thereof. The separate plate 143 is moved by the return spring 148 via the separate plate 142 toward the pressure plate 146 as far as to contact the clutch cover.

The release of the second clutch assembly 12, the torque conduction member 14 and the first clutch assembly 15 is thereby completed.

As the one end portion 214 of the release fork 21 is returned (to the right direction) by the rod 303, the other end portion 215 of the release fork 21 is moved to the left by means of the force of the diaphragm spring 172. The movement of the inner peripheral portion of the diaphragm spring 172 to the left leads the outer peripheral portion of the diaphragm spring 172 to increase the urging force on the pressure plate 146.

An increase of urging force on the pressure plate 146 by the diaphragm spring 172 leads to successive engagement of the friction plate 151, separate plate 143, friction plate 132, separate plate 142 and friction plate 131. In this movement, the return springs 148, 149 are compressed by the separate plates 143, 142.

Since the friction plate 151 of the first clutch assembly 15 has a high friction coefficient, it can quickly achieve interlock with the pressure plate 146 and the separate plate 143. On the other hand, the low friction plates 131, 132 of the second clutch element assembly 12 are adapted to engage with slipping. It is therefore possible to obtain a smooth and reliable engagement of the starting device through operation of the second clutch assembly 12, torque conduction member 14 and first clutch assembly 15.

### Explanation of Operation

As the urging force on the pressure plate 146 by the diaphragm spring 172 is increased, the pressure plate 146 urges together all of the friction plate 151, separate plate 143, friction plate 132, separate plate 142 and friction plate 131.

Because of the permanent magnets 75 installed in the closed wall of the clutch drum 141 and the aluminum plate 76 arranged in opposition to the magnets 75, so as to block magnetic flux issued from the magnets 75, an induction current is generated in the aluminum plate 76 wherein a magnetic reaction fluctuates in accordance with the difference between the rotary speed of the torque conduction member 14 and the rotary speed of the flywheel 110.

### Start-Up From Sanding

In starting the vehicle, before the output shaft of the engine and the input shaft of the transmission unit are interlocked, that is before the first gear of the transmission unit is selected, it is supposed that the engine is in a constant idle.

If the vehicle stops moving, the friction plate 151 does not rotate and the torque conduction member 14 is constantly but slowly rotating relative to the flywheel 110 due to the above explained magnetic reaction.

When the urging force from the diaphragm spring 172 on the pressure plate 146 exceeds a certain amount, the pressure plate 146, friction plate 151 and separate plate 143 come into contact with one another whereby a certain torque determined by the magnetic reaction can be transmitted to the input shaft 16 of the transmission unit, which should become a dragging torque for a smooth start of the vehicle even on an upward incline.

As the urging force further increases, the friction plates 131, 132 and the clutch drum 141 begin to contact one another with slipping and then interlock. Accordingly, the torque generated by the engine is effectively delivered to the input shaft 16 of the transmission unit 2.

### Gear-Shifting

It is generally known that the engine speed slows after an up-shift and rises after a down-shift.

When shifting up, the connection between the torque conduction member 14 and the second clutch assembly 12 is released, and then the connection between the torque conduction member 14 and the first clutch assembly 15 is released. As the gear ratio of the transmission unit 2 is changed, the torque conduction member 14, the first clutch assembly 15 and the second clutch assembly 12 are again connected. Incidentally, the up- shift operation can be conducted smoothly because of the magnetic reaction between the associated permanent magnets 75 and aluminum plate 76.

For example, in a vehicle moving at a constant speed with an engine speed of 4000 revolutions per hour (hereinafter referred to as "r. p .h") before an up-shift, upon up-shifting the engine speed would become about 2250 r.p.h. if there were no magnetic reaction; however, the torque conduction member 14 maintains the same engine speed at 4000 for the first clutch assembly 15 because of inertia thereof.

When up-shifting, the degree of opening of the accelerator is conventionally made small to slow down the engine speed and the rotational speed of the first clutch assembly 15 is controlled at 2250 r.p.h by means of the transmission unit after the up-shift, so that the torque conduction member 14 remains at a relatively high rotary speed, detracting from the smoothness of the gear shift. But, in the present invention, due to the above-mentioned magnetic reaction, the rotary speed of the torque conduction member 14 also changes to a rotary speed corresponding to the engine speed after the gear shift, whereby an improved interlocking among the torque conduction member 14, first clutch assembly 15 and second clutch element assembly 12 in the up-shift is achieved. It should be understood that the same improved gear shift in a down-shift is obtained due to the magnetic interaction between the permanent magnets 75 and the aluminum plate 76.

### Explanation of the Hydraulic Control Circuit

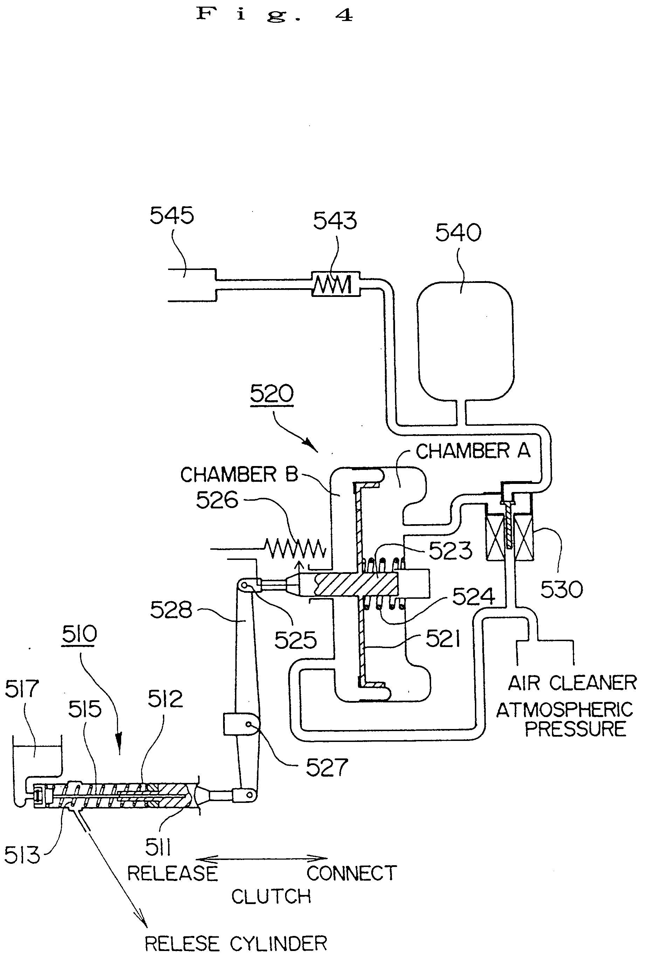

As shown in Fig. 4 the hydraulic control circuit includes a master cylinder 510 for feeding working fluid into the release cylinder 30, a vacuum operated device 520 for driving the master cylinder 510, a vacuum control valve 530 for controlling the degree of negative pressure to the vacuum operated device 520, and a vacuum tank 540 for supplying the vacuum.

The master cylinder 510 has a piston 511 which reciprocates inside a cylinder 512 along a guide rod 515 extending in the longitudinal direction of the cylinder 512. Oil pressure is thereby fed from the cylinder 512 into the release cylinder 30 in accordance with displacement of Piston 511.

The vacuum operated device 520 includes a piston 521 and a diaphragm dividing its interior into two sections (Chamber A and Chamber B). Device 520 further includes a rod 523 which is reciprocally driven by the piston 521, a return spring 524 coupled to the rod 523, and a potentiometer 526 for detecting the displacement of the rod 523. The detected displacement value of the rod 523 corresponds to the urging force applied to the pressure plate 146 by the diaphragm spring 172.

The chamber A of the vacuum operated device 520 is connected to the vacuum tank 540 via the vacuum control valve 530.

The vacuum, ("negative pressure") fed to the chamber A is, as depicted in FIG. 4, first received through an intake manifold 545, in the vacuum tank 540 via a one-way valve 543 and then finally fed to device 520 by means of the vacuum control valve 530 operated by a duty solenoid, under control of a control unit explained later.

The other chamber B is open to the ambient atmosphere via an air cleaner.

The duty solenoid arranged in the vacuum control valve 530 is operated, based on control signals issued from the control unit, to control the interior pressure of the chamber A, whereby the rod 523 is moved to an extent determined by the pressure difference between the chambers A and B. The forward end 525 of rod 523 is connected to a forward end of the piston 511 in the master cylinder 510 via a connecting rod 528 which pivots about a point 527.

By lowering the pressure within the chamber A to below atmospheric pressure. thereby moving the rod 523 to the right in the drawing, the connecting rod 528 causes the piston 511 of the master cylinder 510 to move to the left to thereby feed the oil pressure into the release cylinder 30. As the pressure within the chamber A returns to atmospheric pressure, the piston 511 of the master cylinder 510 is returned by a reaction force in combination with the return spring 524 and the one end portion 214 of the release fork 21, whereby the oil pressure, previously fed to the release cylinder 30, is withdrawn into the master cylinder 510.

As has been described above, the motion of the one end portion 214 of the release fork 21 can be controlled by operation of the release cylinder 30.

### Explanation of Control Unit

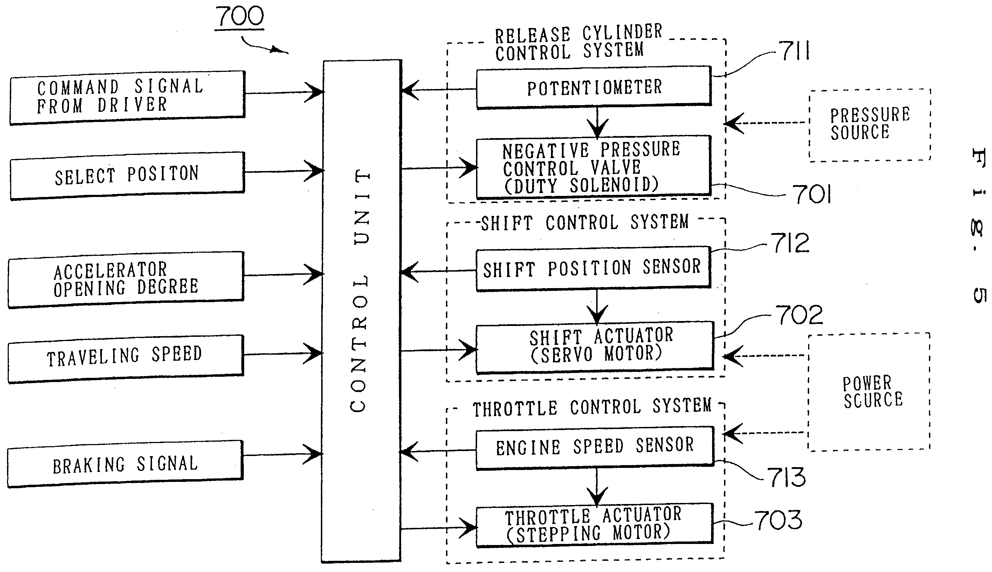

FIG. 5 is a schematic view depicting an input-output system (hereinafter referred to as "I/O system") of the control unit 700.

The control unit 700 is mainly a computer having an input port adapted to receive detected signals showing an instant state of control and driving conditions. The detected signals are, for example, a control signal by a driver (e.g., "up-shift", "down- shift", "neutral" , "forward" or "reverse"), a selected position signal showing the instant state of the gearing ("First gear", "Second gear" or the like), a signal for degree of accelerator opening indicating degree of depression of the accelerator, a traveling speed signal and a brake signal indicating operation of the brakes.

An output port of the control unit 700 outputs signals to actuators such as a duty solenoid 701 governing the vacuum control valve 530 which operates the release cylinder 30, a shift actuator 702 consisting of a servo motor moving the shift fork of the transmission unit 2, and a throttle actuator 703 consisting of a stepping motor for regulating the engine speed. The input, port of the control unit 700 further receives detection signals from the potentiometer 711, a shift position sensor 712 and an engine speed sensor 713 for respectively conducting feed-back control of the vacuum control valve 530, the shift actuator 702 end the throttle actuator 703.

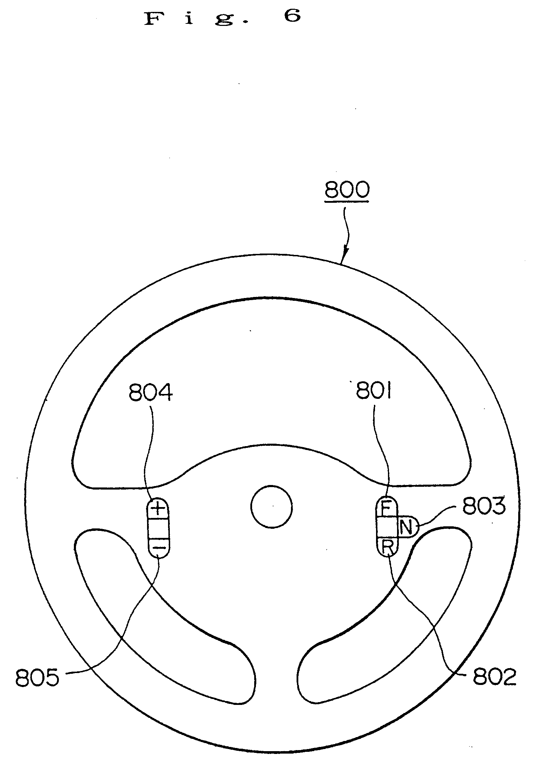

Referring now to FIG. 6, there is shown a steering wheel 800 for use in a vehicle equipped with a starting device in accordance with the present invention.

As shown in Fig. 6, the steering wheel 800 is equipped with several push-buttons, for operation by the driver, at the right and left front portions thereof. on the right side of the steering wheel 800, is a first button 801 which is 25 marked "F" to place the vehicle in forward, a second button 802 marked "R", to place the vehicle in reverse, and a third button 803 marked "N" to place the transmission unit in a neutral state.

On the left side is an up-shift button 804 for commanding an up-shift and a down-shift button 805 for commanding a down-shift.

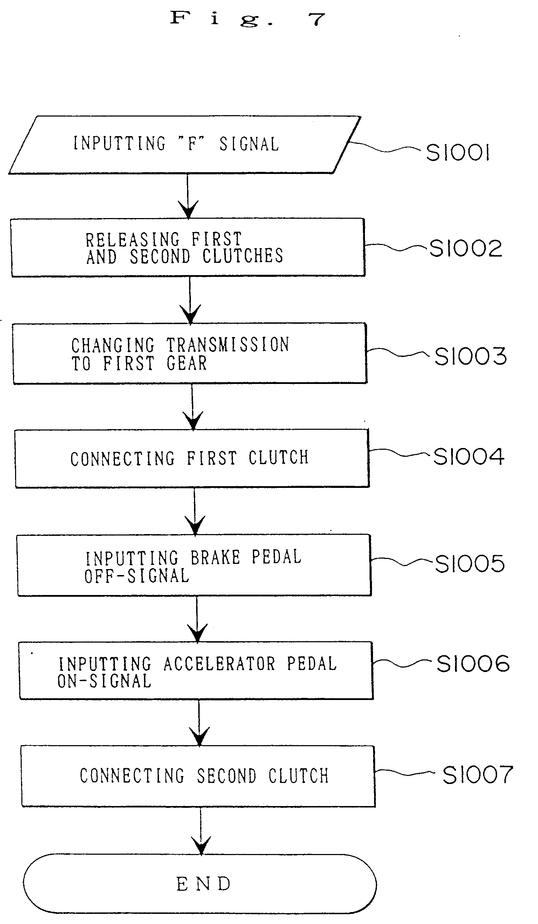

Figs. 7 - 8 are charts showing how the control unit-700 controls several actuators upon receiving command signals from the driver.

When the button "F" 801 is pushed by the driver to place the vehicle in forward (S1001), as shown in Fig. 7, the second clutch assembly 12 and the first clutch assembly 15 are released together by movement of the release fork 21 to reduce the urging force generated by the diaphragm spring 172, whereby the friction plate 151 is freed from the pressure plate 146 and separate plate 143 and the friction plates 131 and 132 of the second clutch assembly 12 are also freed with slipping.

To establish the first gear in the transmission unit 2 the shift fork is moved to a predetermined position by means of a servo motor (S1002) (not shown). The first clutch assembly 15 is engaged to a limited extent (S1003) after the first gear is selected. The first clutch assembly 15 can be engaged by feeding working fluid into the release cylinder 30 so that the diaphragm spring 172 urges the first clutch assembly 15 into engagement to a limited extent based on a voltage value detected by potentiometer 526 (S1004).

Responsive to detection of braking (S1005) and depression of the accelerator pedal (S1006), the working fluid pressure in the release cylinder 30 is adjusted to engage the second clutch assembly 12 with slipping (S1007).

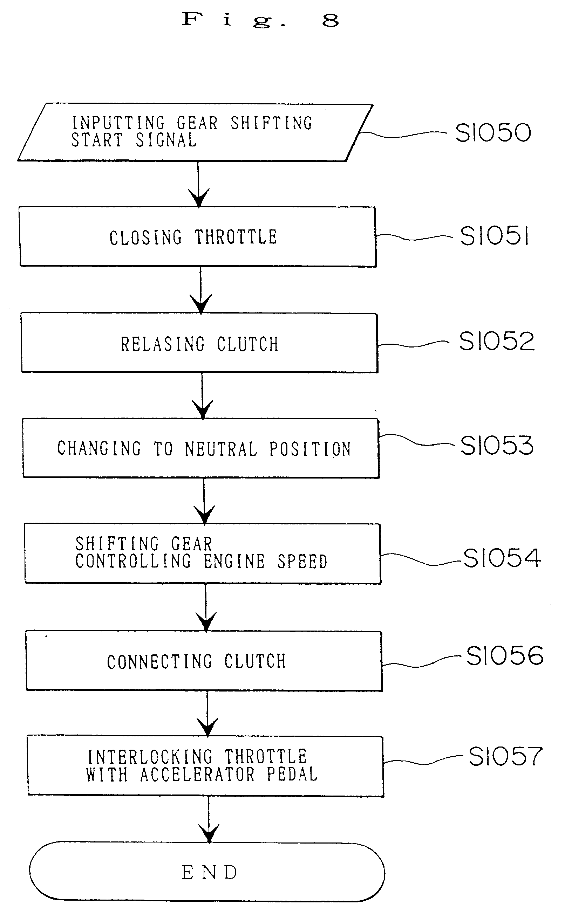

As shown in FIG. 8, when the driver pushes the up-shin button 804 or down-shift button 805 (S1050), the second clutch assembly 12 and first clutch element assembly 15 are released (S1052) the same steps discussed above in connection FIG. 7.

Subsequently, the shift fork of the transmission unit 2 is moved by the servo motor (not shown) to the neutral state (S1053). The shift fork is moved upon operation by the driver of either the up-shift button 804 or down-shift button 805 to thereby shift the gearing up or down, while controlling the engine speed (S1054). The engine speed control is carried out by the throttle actuator 703 which does not respond to the accelerator opening degree signal in this control scheme.

The second clutch assembly 12 and the first clutch assembly 15 are respectively engaged (S1054) when the first clutch element assembly 15 finishes connecting without slip while the second clutch assembly 12 is engaged with slipping (S1056). The throttle actuator 703 is retrieved in accordance with the accelerator opening degree signal (S1057).

### Effect of the Embodiment

According to the embodiment, as the urging force of the diaphragm spring 172 on the pressure plate 146 increases, the pressure plate 151 of the first clutch assembly 15, having a high friction coefficient, completes the inter-locking with the torque conduction member 14 without slipping.

Subsequently, the friction plates 131, 132 in the second clutch assembly 12, having a low coefficient of friction, engage with slipping. Since engagement of the friction plate 151 having a high coefficient of friction can be completed before the engagement of the friction plates 131, 132 having a low friction coefficient, shock upon engagement of the first clutch assembly 15 is prevented and smooth engagement is achieved overall due to engagement of the clutch assembly 12 with slippage.

When the output shaft 11 of the engine and the input shaft 16 of transmission unit are interlocked, the torque conduction member 14, the first clutch assembly 15 and the second clutch assembly 12 can be engaged smoothly to one another, since the torque conduction member 14 is rotated by the flywheel 110 because of the magnetic reaction between the torque conduction member 14 and the flywheel 110, without transfer of inertia.

Even if the vehicle is not moving, the torque conduction member 14 rotates following the flywheel 110, so that if the urging force of the diaphragm spring 172 toward the pressure plate 146 is maintained to interlock the first clutch assembly 15 with the torque conduction member 14, torque drag is generated to prevent engine stopping when starting to move, even on an uphill incline.

Even if the second clutch assembly 12 has plural plates, which slip, the connection between the first clutch assembly 15 and the torque conduction member 14 can be insulated when shifting. The inertia of the input shaft extending from the transmission unit is limited to the first clutch assembly 15, so that a synchro-mesh of the transmission unit 2 does not have much load, allowing a quick gear change. Because the second clutch assembly 12 is free of the problem of inertia, its shape, structure and materials can be selected in view of durability. Because the first clutch assembly 15 is free from any requirement for slippage. its shape, structure and materials can be selected to cope with the inertia problem and to provide durability.

### FIRST MODIFICATION

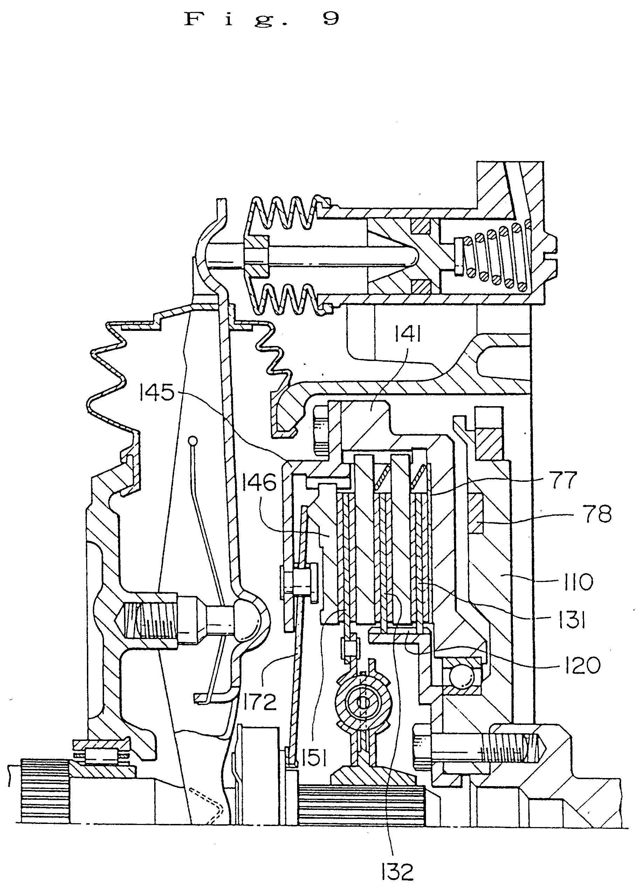

FIG. 9 is a view of a first modification of the embodiment. This modification is characterized by a different arrangement of permanent magnets and corresponding aluminum plate. Specifically, the permanent magnets 78 are provided on the clutch drum, of the flywheel 110 made of steel so that they oppose the closed wall of the clutch drum 141, the permanent magnets consisting of plural N and S poles radially aligned alternately with one another at a spaced interval. The clutch drum 141 is made from aluminum, as in the foregoing embodiment and includes a steel plate 77 at the inside surface thereof.

Since the permanent magnets 78 are mounted in the flywheel 110 in this modification, they are not influenced by frictional heat generated in the friction plates 131, 132.

### SECOND MODIFICATION

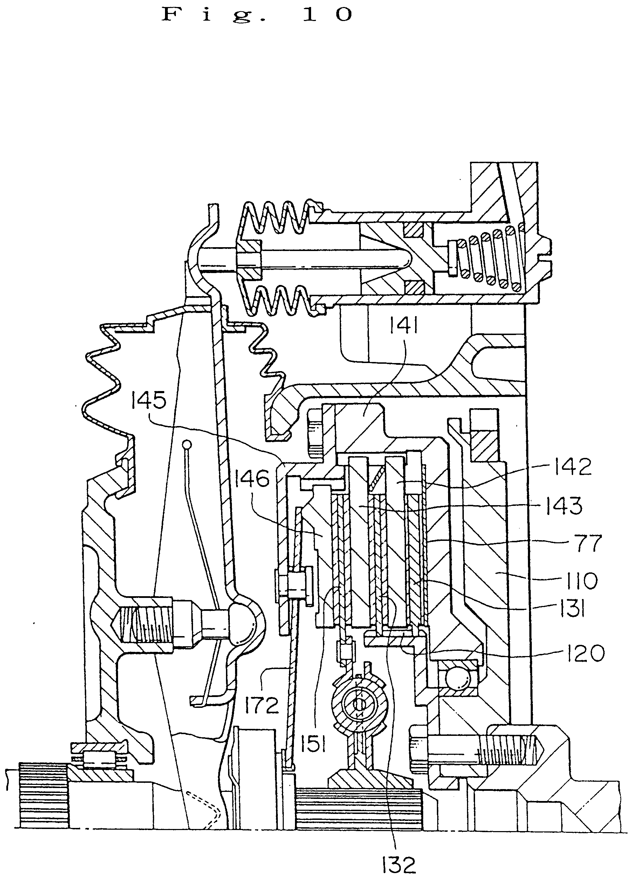

A second modification of the embodiment is shown in Fig. 10. This modification is characterized by a different arrangement of the permanent magnets.

Specifically, the friction plate 131 is made mainly of a permanent magnet which forms its core portion and is finished with a covering ceramic coating to serve as a friction member. In this modification, the separate plates 142, 143 are made from aluminum as well as the clutch drum 141. This modification is preferred for obtaining a strong magnet reaction since the aluminum plates are provided on both sides of the magnet.

### OTHER MODIFICATION

It is to be understood that the present invention is not intended to be limited to the above-described embodiments, and various changes may be made therein without departing from the spirit of the present invention. For example, the second clutch assembly 12 may have a single friction plate. Also the first clutch assembly 15 may have a plural of friction plates. The first clutch assembly 15 can be coupled to the output shaft of the engine and the second clutch assembly 12 can be coupled to the input shaft of the transmission unit 2.

### EFFECT OF THE INVENTION

According to the above-described invention, when connecting and disconnecting the output shaft of the engine with the input shaft of the transmission unit, there is no load on the synchronizer system of the transmission unit and shock upon shifting the gearing is thereby avoided.

In accordance with the invention, the load application means applies the load to the first connecting surface and the second connecting surface, the first connecting surface having higher engaging force completes the inter-locking, before the second connecting surface having lower engaging force completes the interlocking. The shock upon engagement of the first connecting surface is prevented and smooth engagement is achieved overall due to engagement of the second connecting surface with slippage.

While the first connecting surface is not interlocked, the torque conduction member slowly rotates relative to the output shaft of the engine due to magnetic reaction. Accordingly, the torque conduction member rotates following to the output shaft of the engine without inherent inertia, the difference of the rotational speed between the torque conduction member and the first clutch assembly is minimized, the first connecting surface can be engaged smoothly when shifting the gear.

The magnetic reaction generates creeping which prevents engine stopping when starting to move, even on an uphill incline.

Since the torque conduction member is provided between the second clutch assembly and the first clutch assembly, when the load application means stops to apply the load, and releases the connection of the first connecting surface, the first clutch assembly is fee from the inertia of the torque conduction means and the second clutch assembly connected to the output shaft of the engine. Accordingly, the synchronizing mechanism of the transmission unit does not have much load, allowing a quick gear change.

### INDUSTRIAL FILED OF UTILIZATION

As has been explained above, the starting device of the present invention is provided between the engine and transmission unit, and utilized to connect and disconnect therebetween. The engine includes a driving machine i.g. an internal combustion engine, electric motor, and the transmission unit includes not only a transmission using gears but also a transmission using belts.

## Claims

**1**. A starting device for connecting and disconnecting an out-put shaft of an internal combustion engine and an input shaft of a transmission unit; characterized in that:
a first clutch assembly coupled to one of the input shaft and the output shaft;
a second clutch assembly coupled to one of the output shaft and the input shaft;
a torque conduction member between and rotatable relative to said first and second clutch assemblies, said torque conduction member having a first connecting surface for engaging said first clutch assembly and a second connecting surface for engaging said second clutch assembly, said first connecting surface providing a substantially higher engaging force than that provided by said second connecting surface; and
load application means for applying and releasing a load to the first and second connecting surfaces.

**2**. A starting device for connecting and disconnecting an out-put shaft of an internal combustion engine and an input shaft of a transmission unit; characterized in that:
a first clutch assembly coupled to one of the input shaft and the output shaft;
a second clutch assembly coupled to one of the output shaft and the input shaft;
a torque conduction member between and rotatable relative to said first and second clutch assemblies, said torque conduction member having a first connecting surface for engaging said first clutch assembly and a second connecting surface for engaging said second clutch assembly, said first connecting surface providing a substantially higher engaging force than that provided by said second connecting surface;
load application means for applying and releasing a load to the first and second connecting surfaces; and
a coupling provided between said torque conduction member and the assembly coupled to the output shaft.

**2**. A starting device according to claim 1 or claim 2, characterized in that
the respective contacting forces at the first and second connecting surfaces depend upon coefficients of friction of the first and second connecting surfaces.

**3**. A starting device according to claim 1 or claim 2, characterized in that
the respective contacting forces at the first and second connecting surfaces depend upon a resilient member which adjusts the load applying to the connecting surface.

**4**. A starting device according to claim 1 or claim 2, characterized in that
said elastic member comprises a spring.

**5**. A starting device according to claim 2, characterized in that
said coupling comprises magnets mounted on one of said torque conductive member and said output shaft and an electrically conduction member flowing induced current due to said magnets mounted on anther side.

**5**. A starting device according to claim 2, characterized in that
said magnets comprise permanent magnets provided on the second clutch assembly.

**6**. A starting device according to claim 2, characterized in that
said magnets comprise permanent magnets provided on a flywheel secured to the output shaft of the engine.

**7**. A starting device according to claim 2, characterized in that
said magnets are permanent magnets radially aligned on a coronary member secured to the output shaft of the engine.

**8**. A starting according to claim 2, characterized in that
said second clutch assembly has a friction plate that comprises a protection layer on a surface of the permanent magnets.

**9**. A starting device according to claim 7 or claim 8, characterized in that
said permanent magnets are spaced and present alternating north and south poles facing said electrically conductive member.

**10**. A starting device according to claim 1, characterized in that
said electrically conductive member is composed of a nonmagnetic electrically conductive substance.
